# EUROPEAN PATENT APPLICATION

(11) **EP 4 650 326 A1**
(43) Date of publication of application: **19.11.2025**
(21) Application number: 25177060.8
(22) Date of filing: 16.05.2025
(51) Int. Cl.: C02F 1/36, C02F 1/463, C02F 1/52, C02F 1/32, C02F 101/10

(54) **TREATMENT OF FLUIDS**

(30) Priority: 17.05.2024 GB 202407049
(71) Applicant: KP2M Limited, Swansea SA6 8QR (GB)
(72) Inventor: RATTENBURY, Michael, Swansea, SA6 8QR (GB)
(74) Representative: HGF

(57) **Abstract**

A method of treating fluid comprises the steps of:
• passing a fluid to be treated into a fluid treatment zone defined between electrodes and electrolysing the fluid within the treatment zone to form an electrolysed fluid;
• causing or allowing electrolysed fluid to leave the treatment zone;
• either adding a natural coagulant to the fluid; and/or
• adding natural coagulant to the electrolysed fluid within the fluid treatment zone; and/or
• adding natural coagulant to the electrolysed fluid downstream of the fluid treatment zone, and
• allowing or causing flocculation of the electrolysed fluid (e.g. outside of the treatment zone) to provide a treated fluid.

There is also disclosed a fluid treatment system (100) which comprises an electrolyser (101) defining a treatment zone for electrolytic treatment of fluid (F), a natural coagulant addition means (NCA), a controller or control means and a mixing means (102) , the controller or control means being configured to operably control the natural coagulant addition means (NCA) to add natural coagulant to fluid egressing the electrolyser (101).

## Description

The invention relates to the treatment of fluids. More particularly, the invention relates to the treatment or decontamination of fluids using electrochemistry.

Treatment or decontamination of fluids is frequently required to remove entrained matter (e.g. suspended or dissolved matter) and/or to disinfect impurities. The fluid to be treated or decontaminated may especially be contaminated water, for example, drinking water, waste water, industrial effluents, shipboard waters, process waters, ground run-off waters or leachate water. The fluids may contain one or more contaminants, for example, inorganics, organics, suspended material, colloidal matter, metals, organo-metalloids, radionuclides, herbicides, pesticides and bacteria, viruses and other microorganisms.

To date, decontamination has been widely achieved by physical and/or chemical means. For example, utilising, oxidation and reduction, using filters, settlers, chemicals and biological processes. As contaminants in fluids have become more complex over the last century due to increasing industrialization, the use of conventional treatment methods has become less effective. At the same time, the increase in the stringency of the requirements as to the purity of waste streams, in particular, effluent streams, has increased the areas of industrial operation for which decontamination of waste or other fluid streams is needed or required.

The use of electrolysis for the treatment of liquids is well documented. Similarly the use of sonochemistry for treating liquids, as well as a means for changing the chemical properties of fluids, has been proposed. Typically, in electrolysis, a DC or AC current applied across the anode and cathode electrodes immersed in the fluid (electrolyte) results in dissolution of the anode to produce reactive reagents (e.g. aluminium ions, ferrous and ferric ions) whilst at the cathode electrode water hydrolyses to produce hydrogen ions and hydroxyl ions. The net result of these reactions is the production of, for example, aluminium hydroxide, ferric hydroxide or ferrous hydroxide which acts as a coagulant and adsorbs contaminants from the fluid. These reactions are typically referred to as electro-coagulation and electro-flocculation.

Sonochemistry (ultrasound) has been long established for cleaning and for mixing, and to accelerate chemical processes. Ultrasonication (typically 15 - 200 kHz or 20 to 200 kHz frequency) generates alternating low pressure and high pressure waves in fluids, leading to the formation and violent collapse of small vacuum bubbles. This phenomenon is termed cavitation and causes high speed impinging liquid jets and strong hydrodynamic shear-forces.

These effects together with the applied energy input and material transfer through the boundary layers of the fluid are used for de-agglomeration of contaminants, disintegration of cells, mixing of reactants, production of free radicals (e.g. hydroxyl radical). Such sonochemical effect leads to a substantial reduction in reaction time and cleaning effect of objects immersed in an ultrasonic device and in some cases may lead to the increased density of agglomerated material.

The combination of sonochemistry with electrolysis offer the advantage of increased rates of chemical reaction, negate electrode fouling by destroying the Helmoltz-Stern boundary layers on the anode electrode surfaces and passivation when electrically excited, increase oxidative reactions through the production of hydroxyl radicals and increase mixing effects within the reactor device. Previous publications describe such devices as consisting of a metallic ultrasonic horn (also known as acoustic horn, sonotrode, acoustic waveguide, ultrasonic probe) immersed in an electrolytic reactor containing contaminated fluids and immersed anode and cathode attached to an electrical power supply.

In our earlier patent application (published as WO2016/146986) we disclose a system and method to treat fluids by sonochemistry. This system relies on a grounded tank acting as an electrode upon which ultrasonic transducers are mounted. An internally mounted counter electrode completes the electrolysis cell. Fluid to be treated is introduced into the tank and treated water is removed from the tank. Electrocoagulation occurs as a result of sacrificial generation of metal ions from the counter electrode. Clearly, the greater the generation of ions the higher the treatment/coagulation effect.

In the United Kingdom, at least, permit levels for phosphorous are around 1mg/ml and those for iron and aluminium are typically 4 mg/l 95%ile and 8 mg/l upper tier and 2 mg/l 95%ile and 4 mg/l upper tier respectively (although in some instances they can be more stringent).

It would be beneficial to have a method and system for treating fluids which achieve low phosphorus and iron (and/or aluminium) levels whilst removing the need for tertiary solids removal stages and/or to reduce operating costs. This invention seeks to address one or both of those aims.

Accordingly, a first aspect of the invention provides a method of treating fluid, the method comprising the steps of:
a) passing a fluid to be treated into a fluid treatment zone defined between electrodes and electrolysing the fluid within the treatment zone to form an electrolysed fluid;
b) optionally, sonicating fluid within the fluid treatment zone, for example simultaneously sonicating and electrolysing the fluid for at least part of the time;
c) causing or allowing electrolysed fluid to leave the treatment zone;
d) either adding a natural coagulant (e.g. a water-soluble natural coagulant) to the fluid; and/or
   adding natural coagulant (e.g. a water-soluble natural coagulant) to the electrolysed fluid within the fluid treatment zone; and/or
   adding natural coagulant (e.g. a water-soluble natural coagulant) to the electrolysed fluid downstream of the fluid treatment zone, and
e) allowing or causing flocculation of the electrolysed fluid (e.g. outside of the treatment zone) to provide a treated fluid.

Step b) is preferably undertaken. Step b) may be achieved by activating one or more ultrasound generators.

The method may comprise, in step a), continuously passing the fluid to be treated into the treatment zone. The method may comprise in step c), continuously egressing electrolysed fluid from the treatment zone. The residence time of fluid within the treatment zone may be controlled by one or more of the rate of ingress and the rate of egress. Valves may be provided to control the rate of ingress and/or the rate of egress. The rate of ingress and/or rate of egress (e.g. the valves) may be controlled under control of a controller or control means. The controller or control means may be operably connected to a power source and/or the sonication means to control operation thereof. The controller or control means may be operably connected to one or more sensors, for example one or more sensors operable to determine one or more fluid quality parameters, which may be upstream, downstream and/or within the fluid treatment zone.

A natural coagulant is a coagulant derived and/or extracted from plants and/or other locally available materials. Examples include prickly pear cactus, moringa seeds, broad beans, fava beans and/or anionic, cationic or neutral polymers, e.g. plant-derived anionic, cationic or neutral polymers (see Koul et al.; Water 2022 (14) 3751). We prefer to use plant-based natural coagulants. Natural coagulants may be fluidic and/or water-soluble.

Natural coagulants are known to reduce the total suspended solids, but are known not to be able to remove phosphate ions from fluids.

Advantageously, the method of the invention can achieve low levels of total suspended solids in the treated fluid, and particularly achieves low phosphorus, aluminium and/or iron levels without the need for a tertiary solid removal stage. Removal of the tertiary solid removal stage reduces capital costs.

Moreover, the combination of electrocoagulation and the addition of natural coagulants in the method of the invention drastically reduces the metal dosage required compared to when electrocoagulation is used alone. Therefore, either a smaller electrolysis unit can be provided and/or operational costs can be reduced as less metal and/or less energy is required to achieve the necessary iron doses to reduce phosphorus levels.

Accordingly, we have surprisingly found that electrocoagulation and natural coagulant dosing act synergistically to improve fluid treatment, leading to lower capital costs and/or operating costs for fluid treatment whilst meeting permitted levels of iron, aluminium and/or phosphorous.

The electrolysed fluid may be agitated, e.g. stirred or mixed.

The natural coagulant may be added before, during or after agitating, stirring or mixing the electrolysed fluid. We prefer to add the natural coagulant after commencement of the mixing of the electrolysed material.

The natural coagulant may be provided in a free and/or unbound form (i.e. not coated onto or conjugated to any other material) and added to, e.g. mixed with, the fluid to be treated and/or the electrolysed fluid. Advantageously, by adding a free or an unbound natural coagulant directly to the fluid to be treated and/or to the electrolysed fluid provides more effective coagulation of solids of the fluid undergoing treatment.

The natural coagulant may be a water-soluble natural coagulant. The natural coagulant may be a plant-derived polymer. The natural coagulant may be a water-soluble plant-derived polymer. The natural coagulant may be a natural coagulant in the BEWAT(RTM) range (commercially available from Servyeco) or the Hydrex(RTM) range (commercially available from Veolia Water Technologies), although any natural coagulant may be used.

In embodiments, one or both of the electrodes for use in the methods of the invention may be formed from iron. In embodiments, one or both of the electrodes for use in the methods of the invention may be formed from aluminium. In embodiments, the cathode may be formed from iron, e.g. stainless steel. In embodiments, the anode may be formed iron or aluminium. In embodiments, the cathode may be formed from stainless steel, and the anode may be formed from aluminium or iron.

The methods of the invention may be used as a method of reducing the phosphorus content of fluid to below that of a permitted level, e.g. of 1 mg/L. Advantageously, the reduction of phosphorus content to below a permitted level, e.g. 1 mg/L, using the method of the invention is achieved using less energy than electrolysis alone, in the absence of the natural coagulant.

A further aspect of the invention provides a fluid treatment system, the system comprising an electrolysing means or electrolyser, a natural coagulant addition means, a controller or control means and a mixing means or mixer, the controller or control means being configured to operably control the natural coagulant addition means to add natural coagulant to fluid egressing the electrolysing means or electrolyser.

The electrolysing means or electrolyser comprises electrodes which may be formed from iron, e.g. stainless steel, or aluminium. In embodiments, one or both of the electrodes may be formed from iron. In embodiments, one or both of the electrodes may be formed from aluminium. In embodiments, the cathode may be formed from iron, e.g. stainless steel. In embodiments, the anode may be formed iron or aluminium. In embodiments, the cathode may be formed from stainless steel, and the anode may be formed from aluminium or iron.

The residence time of fluid within the treatment zone may be controlled by the controller or control means. Valves may be provided to control the rate of ingress and/or the rate of egress. The rate of ingress and/or rate of egress (e.g. the valves) may be controlled under control of the controller or control means. The controller or control means may be operably connected to a power source and/or a or the sonication means to control operation thereof. The controller or control means may be operably connected to one or more sensors, for example one or more sensors operable to determine one or more fluid quality parameters, which may be upstream, downstream and/or within the fluid treatment zone.

Natural coagulant may be added in the range of, say, 1 to 200 mg/l (measured as mass of natural coagulant to volume of fluid to be treated), for example 25 to 150 mg/l and in some embodiments 50 to 100 mg/l, for example 75mg/l.

The natural coagulant addition means may be located to introduce natural coagulant upstream of the mixer or mixing means. Additionally or alternatively, the natural coagulant addition means may be located to introduce natural coagulant into the mixer or mixing means.

The natural coagulant addition means may be configured or suitable for introducing a water-soluble and/or fluidic natural coagulant.

Mixing may be completed by a high shear mixer, commonly termed a flash mixer and/or by a paddle stirrer. In a preferred embodiment mixing takes place in plural stages. In a first stage a relatively more rigorous mixing, for example a relatively fast mixing speed is employed and in a subsequent stage a relatively less rigorous mixing, for example a relatively lower mixing speed, is employed.

In one embodiment there is provided a mixing zone or unit with a first mixing stage fluidly connected to and upstream of a subsequent mixing stage, the first mixing stage comprises a mixer, for example a flash mixer, capable of stirring a propeller or impeller at, say 100-300 rpm, say for 2 to 15 minutes, and the subsequent mixing stage may comprise one or more mixers, for example a paddle stirrer, capable of mixing at say 30 to 160 rpm. In an embodiment there may be two subsequent mixing stages provided with means to effect successively less rigorous mixing.

The fluid treatment method and system of the invention enables decontamination of fluids, especially of contaminated water and waste streams to be carried out in a simple, efficient, effective and rapid manner. In particular, because the decontamination can rely, at least in part, on electrolysis and, together with the natural coagulant addition decontamination can be rapid.

Sonication can negate electrode fouling and build-up of passivation layers along the electrode surfaces in the treatment zone.

It is believed that the unit of the invention enables electrolysis (and where present sonication) to be applied satisfactorily to both a continuous decontamination procedure and/or batch process because the arrangement is such that the liquid stream is caused to flow along the surfaces of the electrodes at which electrolysis (and where present sonication) reactions can occur and when in batch mode (and where present) the sonication process prevents any electrode fouling from passivation such as build-up of gas bubbles or 'floc' material which can reduce the amperage and increase the voltage power across the electrodes. In the system of the invention, however, such reaction products are prevented from occurring in the reactor which may process flow rates of up to 10 MLD (million litres per day) or up to or over 100 MLD or up to or over 200 MLD or up to or over 500MLD.

A further aspect of the invention provides a fluid treatment unit comprising first anode electrode, a second grounded electrode and externally mounted ultrasonic probe mounted to the grounded electrode, defining between the first anode and second grounded electrode a treatment zone having inlet means for introduction of fluid in the said treatment zone and outlet for exit of fluid from the said treatment zone, the treatment zone providing a flow path along which fluid entering through the inlet means can flow towards the outlet, the flow path extending substantially along the surface of each of the electrodes, a natural coagulant introduction means for adding natural coagulant to the fluid within or downstream of the treatment zone and a mixing zone downstream of the treatment zone.

Advantageously, because a tertiary solids removal stage is not needed and/or because a smaller unit can be deployed than would otherwise be the case (*i.e.* without natural coagulant dosing) it is possible to provide a unit with a smaller footprint than would otherwise be the case.

The natural coagulant addition means may be configured or suitable for introducing a water-soluble and/or fluidic natural coagulant.

The ultrasonic generators or probe may comprise a single piezoelectric element or a plurality of piezoelectric elements arranged in an array on the second grounded electrode. The first anode electrode may comprise a plate electrode with a pair of matching major surfaces and/or the grounded electrode may define a tank or container. Preferably, the first anode electrode is located within the tank or container, such that fluid flowing from the inlet to the outlet flows over and/or across both major surfaces of the anode electrode.

The system may comprise an inlet. The inlet may comprise a channel that extends across the treatment zone in a direction transverse to the principal direction of flow within the treatment zone. The purpose of such a construction is to enable fluid to be introduced into the treatment zone in a relatively even laminar flow. The outlet may comprise a channel that extends across the treatment zone in a direction transverse to the principal direction of flow within the treatment zone.

The ultrasonic generators may comprise a single piezoelectric element or a plurality of piezoelectric elements arranged in an array on the second grounded electrode. Said ultrasonic generator means or ultrasonic generators may be operable or may operate at an operating frequency of 15 - 200 kHz or 20 - 200 kHz.

Preferably the system comprises a grounded electrode and an anode electrode. The grounded electrode may define a tank or container. The first anode electrode may comprise a plate electrode with a pair of matching major surfaces. The first anode electrode may be located within the tank or container, such that fluid flowing from the inlet to the outlet may flow over and/or across a, the, one or both major surfaces of the anode electrode. The anode electrode is electrically insulated from the grounded electrode. The ultrasound generators may be mounted on or to the grounded electrode.

In embodiments, one or both of the electrodes may be formed from iron. In embodiments, one or both of the electrodes may be formed from aluminium. In embodiments, the second grounded electrode may be formed from iron, e.g. stainless steel. In embodiments, the first anode electrode may be formed iron or aluminium. In embodiments, the second grounded electrode may be formed from iron, e.g. stainless steel, and the first anode electrode may be formed from aluminium or iron.

The system or unit may include a power source for applying electrical current to the electrolysis means. For example the power source may provide a positive voltage to the first electrode and a ground (earth) to the second grounded electrode. The arrangement may be such that an AC voltage and or DC voltage of varying frequencies and waveform may be applied to the first electrode to provide an operating amperage of 1 - 100,000 amps or 1 -10,000 amps. The system may include a power source for applying a voltage to the ultrasonic generator means or ultrasonic generator.

The system or unit advantageously comprises means for monitoring (e.g. a monitor) one or more electrical characteristics between the first and second electrodes in the treatment zone such that the voltage between the first and second electrodes can automatically vary to achieve a set current amperage across the first and second electrodes, and a monitoring means for monitoring one or more chemical parameters of the fluid either upstream and or downstream of the treatment zone and automatically set the operating amperage for the treatment zone defined by the first and second electrode.

Advantageously, the system comprises a control means or controller. The control means is preferably arranged to control one or more of the applied current for electrolysis, dosage rate of the natural coagulant, the applied frequency and/or power to the ultrasonic generator means and array of piezoelectric elements, in dependence on one or more characteristics monitored by the monitoring means.

The treatment method of the invention may be used for the treatment of any fluid, especially contaminated liquid streams such as contaminated water streams selected from waste-water, industrial effluents, process waters, ground water, rivers and leachates. The method may be used, with appropriate selection of conditions in the treatment zone, to decontaminate fluids containing inorganics, organics, suspended and colloidal material, metals, organo-metalloids, radionuclides, bacteria, viruses and other microorganisms.

The fluid egressing the mixer may be directed to a settlement zone to allow sludge to settle from the fluid.

The method may further comprise obtaining sludge from the process, e.g. from the mixer and/or other settlement zone, and contacting the fluid to be treated with the sludge.

We have advantageously found that the coagulated sludge retains natural coagulant activity and can be used (and potentially reused) to treat new aliquots of fluid to be treated.

Accordingly, the system may comprise a sludge reuse means, the sludge reuse means comprising a conduit to direct sludge generated downstream of the treatment zone to a location upstream of the treatment zone.

A further aspect of the invention comprises obtaining coagulated sludge, the sludge comprising coagulated solids and natural coagulant and adding the sludge to a fluid to be treated.

A further aspect of the invention provides a method of cleaning a sludge which comprises natural coagulant and agglomerated or flocculated contaminant having been generated subsequent to electrolytic treatment of a waste water, the method comprising exposing said sludge to ultrasonic energy to thereby separate the natural coagulant and contaminant.

In some embodiments of the invention, the sludge generated can be used upstream prior to the electrocoagulation step to reduce the phosphorus and/or iron load.

A further aspect of the invention relates to a method of treating such as wastewater to reduce the phosphate concentration, e.g. to below 1 mg/mL, comprising a) passing a fluid to be treated into a fluid treatment zone defined between electrodes and electrolysing the fluid within the treatment zone to form an electrolysed fluid; b) causing or allowing electrolysed fluid to leave the treatment zone; c) either adding a natural coagulant (e.g. a water-soluble natural coagulant) to the fluid; and/or adding natural coagulant (e.g. a water-soluble natural coagulant) to the electrolysed fluid within the fluid treatment zone; and/or adding natural coagulant (e.g. a water-soluble natural coagulant) to the electrolysed fluid downstream of the fluid treatment zone, and d) allowing or causing flocculation of the electrolysed fluid (e.g. outside of the treatment zone) to provide a treated fluid.

A yet further aspect of the invention provides a fluid treatment system suitable for reducing the phosphate concentration, e.g. to below 1 mg/mL, the system comprising an electrolysing means or electrolyser defining a treatment zone for electrolytic treatment of fluid, a natural coagulant addition means configured to add a natural coagulant (e.g. a water-soluble natural coagulant) to the fluid egressing the electrolysing means or electrolyser, a controller or control means and a mixing means or mixer, the controller or control means being configured to operably control the natural coagulant addition means to add natural coagulant to fluid egressing the electrolysing means or electrolyser.

A still further aspect of the invention provides a fluid treatment unit suitable for reducing the phosphate concentration, e.g. to below 1 mg/mL, comprising a first anode electrode, a second grounded electrode and an externally mounted ultrasonic probe mounted to the grounded electrode, defining between the first anode and second grounded electrode a treatment zone having inlet means for introduction of fluid in the said treatment zone and outlet for exit of fluid from the said treatment zone, the treatment zone providing a flow path along which fluid entering through the inlet means can flow towards the outlet, the flow path extending substantially along the surface of each of the electrodes, a natural coagulant introduction means for adding natural coagulant (e.g. a water-soluble natural coagulant) to the fluid downstream of the treatment zone and a mixing zone downstream of the treatment zone.

The second grounded electrode may provide a tank. The tank may have an inlet comprising said inlet means. The tank may have an outlet comprising said outlet means.

The first anode electrode may be located within the tank.

A second anode electrode may be located within the tank. A cathode electrode may be located within the tank. The cathode electrode may be grounded. The cathode electrode may be located between the first and second anode electrode.

The invention will now be described by way of example only and with reference to the accompanying drawings, in which:-
Figure1 is a schematic representation of a system of the invention;
Figure 2A is a longitudinal cutaway section of a first electrochemical treatment unit according to the invention;
Figure 2B is a transverse cutaway section through the electrochemical treatment unit of Figure 2A;
Figure 3A is a longitudinal cutaway section unit of a second electrochemical treatment unit according to the invention;
Figure 3B is a transverse cutaway section through the electrochemical treatment unit of Figure 3A;
Figure 4 is a graph showing the effect of iron and aluminium dosing on phosphorus removal performance when using BEWAT MT48 MR as the natural coagulant;
Figure 5 is a graph showing the effect of iron dosing on phosphorus removal performance when using BEWAT MT48 MR and Hydrex 62925 as the natural coagulant;
Figure 6 is a graph showing the effect of aluminium dosing on phosphorus removal performance when using BEWAT MT48 MR and Hydrex 62925 as the natural coagulant;
Figure 7 is a graph showing the effect of the electrochemical treatment stage on the phosphorus removal performance when doping with iron and using BEWAT MT48 MR as the natural coagulant;
Figure 8 is a graph showing the effect of the electrochemical treatment stage on the iron removal performance when dosing with iron and using BEWAT MT48 MR as the natural coagulant;
Figure 9 is a graph showing the reusability of the sludge when dosing with iron and using BEWAT MT48 MR as the natural coagulant; and
Figure 10 is a graph showing the effect of conductivity on the phosphorus removal performance when dosing with iron and using BEWAT MT48 MR as the natural coagulant.

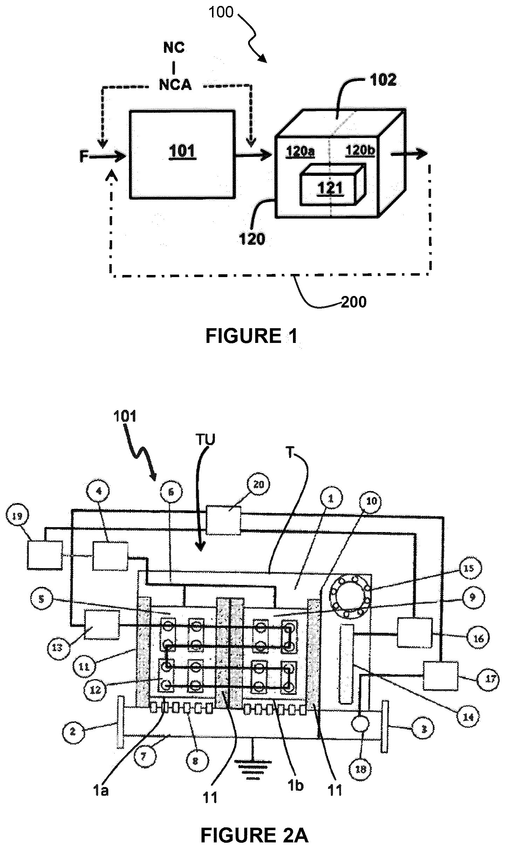

Referring first to Figure 1, there is shown a schematic representation of a fluid treatment system 100 for treating fluid F, for example wastewater, non-potable water, industrial effluent, water from a sewerage plant, run-off water and so on.

The fluid treatment system 100 comprises an electrochemical treatment system 101 and a mixing zone or unit 102. There is further provided a natural coagulant addition means NCA for adding natural coagulant NC to the fluid upstream, into or downstream of the electrochemical treatment system 101. There is also an optional sludge re-use line 200.

The electrochemical treatment system 101 is provided with ultrasound generators and other water treatment devices, as will be explained below.

The mixing zone or unit 102, may comprise a tank 120 in which is provided one or more mixers 121. The tank 120 may be divided into two or more fluidly-coupled compartments (two shown 120a and 120b). If the tank 120 is divided into two or more compartments different mixing regimes may be deployed in each compartment. Preferably, fluid in the upstream compartment 120a will experience relatively more rigorous mixing whereas fluid in the downstream compartment 120B will experience relatively less rigorous mixing. A relatively more rigorous mixer is a flash mixer, a relatively less rigorous mixer is a paddle stirrer.

The tank 120 may be simply divided by one or more baffles (indicated by the dotted line) or by another physical separation barrier for example a mesh, a tube or other conduit. Indeed, the tank 120 may comprise plural tanks fluidly coupled to one another.

In a preferred embodiment the mixing zone or unit 102 comprises an intermediate mixing zone, downstream of the upstream compartment 120a and upstream of the downstream compartment 120b. The fluid will be able to experience an intermediate level of mixing in that zone.

Notably, a clarifying zone or unit downstream of the electrochemical treatment system 101 and the mixing zone or unit 102 configured to perform a tertiary solid removal stage is not required to achieve low levels of total suspended solids in the effluent water stream, for example, to achieve low phosphorus and iron levels.

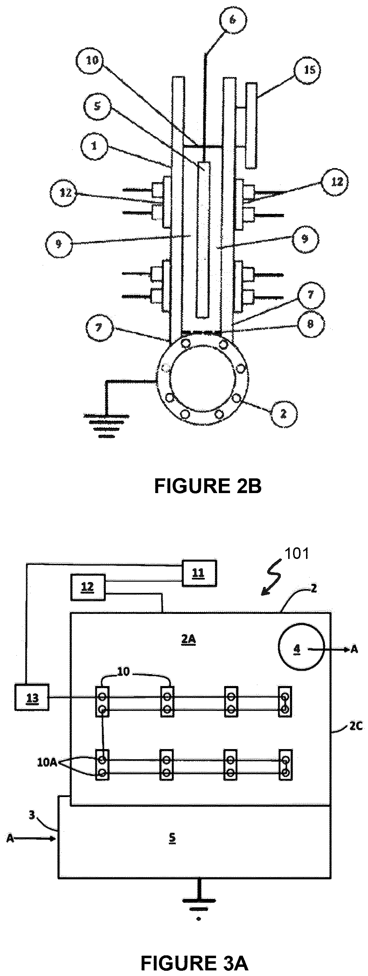

Figure 2A shows a longitudinal cutaway section of a first electrochemical treatment unit according to the invention and Figure 2B is a transverse cutaway section through the electrochemical treatment unit of Figure 2A.

Referring now to Figures 1 and 2A, an electrochemical treatment system 101 for use in the system of the invention comprises a treatment unit TU, the treatment unit TU comprises an electrochemical cell provided with ultrasound generators to form a sonoelectrochemical cell 1, in this embodiment a pair of parallel sonoelectrochemical cells 1a, 1b, and an inlet conduit 2 and an outlet conduit 3. The system TS further comprises an electrolysis power supply 4, an electrode 5 for each cell 1a, 1b connected to the electrolysis power supply 4 by a busbar 6. The grounded electrode 7 provides a reactor housing or tank T fluidly connected to the inlet conduit 2 and outlet conduit 3. The inlet conduit is provided or formed with a perforated channel 8 to provide even laminar flow into the treatment zone 9 for the cell 1 (in this embodiment for each cell 1a, 1b). The treatment zone 9 is defined as the space between electrode 5, ground electrode 7 (which provides the housing or tank T) and extending to the transverse outlet weir 10. The electrodes 5 extend into the treatment zone 9 of each cell 1a, 1b and are secured to the ground electrode 7 by means of insulated sheathed fixings 11 (x3 shown). The ultrasound probe consists of an array of piezoelectric transducers 12 (x8 shown and four for each cell 1a, 1b) connected to the ultrasonic power supply 13. An optional UV lamp 14 may be secured downstream of the treatment zone 9 after the transverse outlet weir 10 and preferably receives power from UV power supply 16.

In addition or instead of the UV lamp 14, a water quality monitoring device 17 may be included along with its water quality probe 18.

An electrical monitoring instrument 19 may be included in the electrolysis power supply 4. The electrical monitoring instrument 19, water quality monitoring device 17, UV lamp power supply 16, ultrasonic power supply 13 feed-back to a master controller 20. An overflow outlet 15 is provided in the sonoelectrochemical cell 1. It will be appreciated that, if desired, the positions of the inlet conduit 2 and outlet conduit 3 may be interchanged (or the direction of flow may be reversed) or the positions of the inlet conduit 2 and outlet conduit 3 may be altered, provided that the liquid passes across the electrodes 5 for treatment. It may be advantageous under some circumstances to use the overflow outlet 15 as a return outlet to return partially treated liquid for recycling through the sonoelectrochemical cell 1. Such a recycle facility allows poorly conducting liquids, difficult 'hard' liquids, or liquids with high pollution loading to receive multiple passes to achieve the appropriate level of required treatment. Whilst the ground electrode 7 is preferably constructed of stainless steel or similar material, the electrode 5 (anode) may be constructed of various conducting materials such as iron or aluminium. Selection of appropriate materials may be based on waste stream characteristics and treatment requirements. For example, iron and aluminium are effective for phosphorous and iron removal.

With reference to Figure 2B, the ground electrode 7 integrates the inlet conduit 2 and outlet conduit 3 and provides the reaction tank T. The electrode 5 is fixed centrally by the insulated sheathed fixings 11 such that the ground electrode 7 wraps around the outside opposing surfaces of the electrode 5. The piezoelectric transducers 11 are mounted externally on the ground electrode so that there are two opposing treatment zones 9 defined between ground electrode 7, electrode 5 and ground electrode 7. Such an electrode design is mono-polar and has the advantage of simple design, doubles the flow and treatment capabilities and has increased electrical capacitance over bi-polar electrode arrangements resulting in lower voltage requirements of the treatment unit TU. The perforated channel 8 along the bottom edge of the ground electrode 7 provides laminar flow past each of the outer surfaces of electrode 5. In the embodiment shown the thickness of the electrode 5 is advantageously within the range of 3 to 25mm or 3 to 50mm or 3 to 100mm and shows two electrodes each of approximately 1200mm x 800mm. Advantageously having the facility to house multiple electrodes 5 also allows various electrode materials to be used simultaneously within the treatment zone 9 such as aluminium and iron. In such a reaction cell typical volumes of flow may be 20,000 litres an hour. The treatment unit TU may be varied in size to cater for appropriate volumes of liquid to be treated by adding or subtracting the first anode electrode and the size of the second grounded electrode casing. Referring to Figure 2A, in the embodiment eight piezoelectric transducers are show on each side of the ground electrode 7, extending across the treatment zone 9. It will be appreciated that a plurality of piezoelectric transducers may be required depending upon the size of the treatment unit, application, contaminant level and desired treatment outcome. In the drawing, the sonoelectrochemical cell has been drawn as rectangular but may be square, cylindrical or any other shape, provided that the electrode and ground electrode are spaced from one another and liquid can enter and leave the treatment zone.

In use, liquid is pumped by an external pump (pump not shown) at a controlled rate through the inlet conduit 2 of the sonoelectrochemical cell 1 and passes up through the perforated channel 8 into the treatment zone 9 flowing between the outer ground electrode 7 and inner electrode 5 which are themselves acting as probes to monitor the electrical characteristics of the fluid-electrode medium by the electrical monitor 19. The fluid then weirs over the transverse outlet weir 10 into the chamber containing the UV lamp 14 and/or water quality probe 18 of the water quality monitoring device 17 before exiting the sonoelectrochemical cell 1 via the outlet conduit 3. It will be appreciated the water quality probe 18 could also be situated in the treatment zone 9, upstream of the sonoelectrochemical cell 1 or downstream of the sonoelectrochemical cell 1 together with multiple combinations of devices to monitor a range of water quality characteristics. In full automation the liquid characteristic are determined by the electrical monitor 9 and water quality monitoring device 17 along with external data such as flow rate and communicated to the master controller 20. The information is used by the master controller 20 to determine the appropriate settings of voltage and electrical current for the electrolysis power supply 4, and ultrasound frequency and power for the ultrasonic power supply 13. The correct treatment regime may, for example, be determined by reference to stored mathematical-chemical models, daily flow rate and contaminant loading profiles, algorithms and may involve the use of fuzzy logic control, neural networks and predictive computational software. In manual or semi-automatic mode, the voltage, current, ultrasound frequency and power may be manually selected by switches, HMI or similar on the master controller 20. Information relayed back to the master controller 20 may be stored on an internal data card, displayed on HMI screen or similar or relayed to a remote location by data transfer. Remote control of the sonoelectrochemical cell 1 may also be controlled by use of web-enabled software or similar data transfer networks.

During operation the pumped flow rate, natural coagulant dose rate, voltage and/or amperage and ultrasound frequency and power are selected to give the optimum degree of treatment and efficiency. This may be done manually or automatically as described above. During normal operation it is preferred to continually pump liquid through the sonoelectrochemical cell 1 and to continually apply a voltage, current, ultrasound frequency and power to the electrode 5. Whilst the sonoelectrochemical cell 1 is suitable for use in the treatment of a continuous flow of liquid, it will be appreciated that the unit could also be used in batch mode in which a predetermined volume of liquid is pumped into the treatment zone 9, a voltage, current, ultrasound frequency and power is applied across the treatment zone to treat the liquid for a pre-determined time after which the electrolysis and sonication systems are switched off and the pump started to flush the treated liquid from the treatment unit and to introduce the next aliquot of liquid for treatment.

In the embodiment described above, the UV treatment process is integral with the electrolysis and sonochemistry. For high solids loading it may be desirable to increase effectiveness of the treatment process, for the material to be removed prior to the UV treatment as the UV process relies on light penetration through clear liquids. That may be achieved by solid-liquid separation or fractionation prior to the UV treatment. Thus, it may be preferred for the UV source to be provided downstream of the sonoelectrochemical cell 1.

In the embodiment described above and shown in the drawings, only one sonoelectrochemical cell (with parallel cell units 1a, 1b) has been described which has a monopolar electrode configuration. It may be advantageous, for large volume waste streams, to include a number of electrodes and size of sonoelectrochemical cell and also to increase the number of sonoelectrochemical cells into a treatment process. In that case a number of cells could be configured so that the electrodes for each cell may be configured as bipolar or multipolar. The treatment cells could also be configured as simplex (single units), duplex (duty, standby and duty and assist) or multi-stage. In these cases the individual treatment units could consist of units mounted onto support frames with common inlet and outlet manifolds. Such a system could consist of cells in series or parallel arrangement, depending upon waste stream characteristics and degree of treatment required. For mixed waste streams it may also be advantageous to include treatment units having different electrode materials and combinations. For high solids throughput it may also be advantageous to carry out pretreatment before the liquid is introduced into the unit.

Also, although the embodiment shows parallel cells 1a, 1b, it would also be possible to use the cells 1a, 1b in series with different anodes 5.

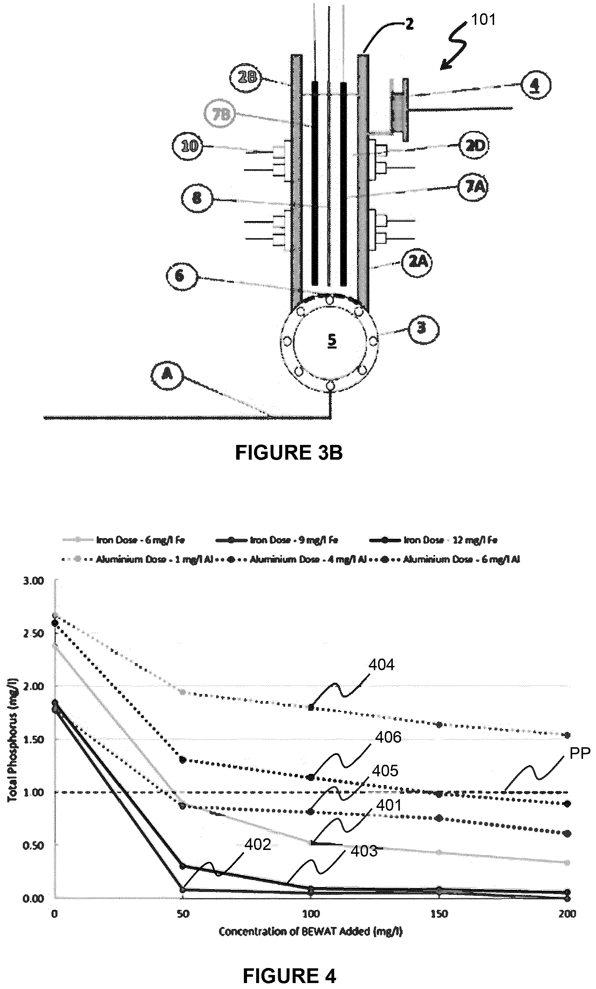

Figure 3A shows a longitudinal cutaway section unit of a second electrochemical treatment unit according to the invention and Figure 3B is a transverse cutaway section through the electrochemical treatment unit of Figure 3A.

Referring now to Figure 3A and 3B an alternative electrochemical treatment system 101 for use in the system of the invention comprises a tank 2 in the form of a rectangular body having front and back walls 2A, 2B and end walls 2C to define a treatment volume 2D. The apparatus 1 is provided with an inlet 3 and an outlet 4 for fluid. The inlet 3 is in communication with a manifold 5 having a perforate portion 6 to allow fluid to pass from the manifold 5 and into the treatment volume 2D. As will be appreciated, and indicated by the arrow A, fluid will pass from the inlet 3 to the outlet 4 via the manifold 5 through the perforate portion 6 and upwardly towards, and thence out from, the outlet 5.

The walls 2A, 2B, 2C are typically formed from stainless steel and may be 3mm thick. The manifold 5 is also typically formed from stainless steel.

Located within the treatment volume 2D is a first plate electrode 7A, a second plate electrode 7B and an intervening plate electrode 8.

The first plate electrode 7A and the second plate electrode 7B are made from iron and/or aluminium. The intervening plate 8 is typically formed from stainless steel.

Mounted on the exterior of the walls 2A, 2B are plural ultrasound generators 10, each comprising at least one, but preferably comprising plural, ultrasonic transducers 10A.

The apparatus 101 is provided with an electrode power supply 11 , an ultrasound generator power supply 12 and a master controller 13. The master controller 13 is configured to control operation of the apparatus 1 and is operably connected to the electrode power supply 11 and the ultrasound power supply 12. Advantageously, the master controller 13 may also regulate fluid flow through the apparatus by controlling one or more downstream or upstream valves (not shown).

The tank 2 and the intervening plate 8 provide cathodes and the first plate electrode 7A and the second plate electrode 7B provide anodes. The tank 2 and the intervening plate 8 are connected to earth. The tank being earthed allows the ultrasonic generators 10 to be connected to the surface of the tank 2.

In use, the apparatus 101 is connected via electric circuitry to the electrode power supply 11 and the ultrasound power supply 12 under the control of the master controller 13. Fluid to be treated (e.g. water) is caused or allowed (for example under the control of the master controller 13) to flow through the apparatus 1 and is subjected to electrochemical treatment at the cathodes and anodes.

In order that the invention may be more fully understood, reference is made to the following non-limiting examples.

### Examples

Multiple municipal waste water samples were acquired. The conductivity, pH and alkalinity of the as acquired samples were tested, along with the amount of iron, aluminium, total suspended solids, total phosphorus before and after filtration and total orthophosphate before and after filtration.

After this initial testing, a liquid stream F consisting of the municipal waste water samples was pumped through a bench-top treatment system 100 according to Figure 1, equipped with a sonoelectrochemical cell as shown in Figures 2A and 2B as a treatment unit TU for dosing. The fluid F was pumped at a flow rate of 0.113 m³/hour. The dosing was performed by suppling a current to an aluminium or iron anode to produce aluminium or iron ions respectively. A current of 0.72 - 2.71 amp was a applied to the iron or aluminium anode. The ground electrode was made of stainless steel.

The natural coagulants used were BEWAT MT48 MR (commercially available from Servyeco) or Hydrex 62925 (commercially available from Veolia Water Technologies). The natural coagulant was added to the water upon entering the mixing zone or unit 102 , in which the mixer operated at a mixing speed of 300 rpm for 30 seconds and then 20 rpm for 3 minutes. The natural coagulant was added in concentrations of 25 mg/l, 50 mg/l, 75 mg/l, 100 mg/l, 150 mg/l and 200 mg/l.

After mixing, the fluid was left to settle for 30 minutes.

The fluid showed clear evidence of coagulation, agglomeration or flocculation of particles. The resultant supernatant was collected and the conductivity, pH and alkalinity of the supernatant tested, along with the amount of iron, aluminium, total suspended solids, total phosphorus before and after filtration and total orthophosphate before and after filtration.

To demonstrate the effectiveness of the invention, a number of tests were conducted using the above method, the results of which are shown in Figures 4 - 10.

### Example 1

Referring now to Figure 4, the effect of iron and aluminium dosing on phosphorus removal when using a BEWAT MT48 MR natural coagulant was tested. During the electrochemical treatment stage, the fluid stream was dosed with iron, to an iron concentration of 6 mg/l (401), using an iron anode and by controlling the electrolysis power supplied to the anode. BEWAT MT48 MR natural coagulant was added to the fluid stream, downstream in the mixing stage of the water treatment process, to concentrations of 50 mg/l, 100 mg/l, 150 mg/l and 200 mg/l and the total concentration of phosphorus (mg/l) of the resultant supernatant was measured. This process was repeated, dosing to iron concentrations of 9 mg/l (402) and 12 mg/l (403), and aluminium concentrations using an aluminium anode of 1 mg/l (404), 4 mg/l (405) and 6 mg/l (406) respectively. The results are shown in Figure 4.

In Figure 4, the red dashed line indicates the required 1 mg/l phosphorus permit (PP). The results show that using 50 mg/l of BEWAT MT48 MR in combination with 6 mg/l (401), 9 mg/l (402) and 12 mg/l (403) of iron or 4 mg/l (405) of aluminium resulted in metal residues below the anticipated phosphorus permit level.

### Example 2

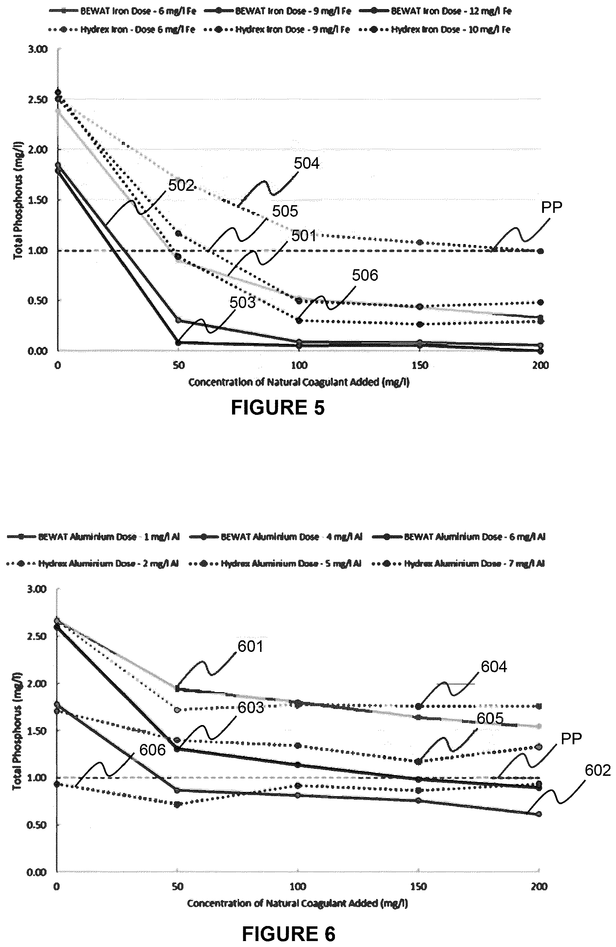

Referring now to Figure 5, the effect of iron dosing on phosphorus removal when using BEWAT MT48 MR and Hydrex 62925 as the natural coagulants were tested.

During the electrochemical treatment stage, the fluid stream was dosed with iron, to concentrations of 6 mg/l (501), 9 mg/l (502) and 12 mg/l (503) by using an iron anode and controlling the electrolysis power supplied to the anode. BEWAT MT48 MR natural coagulant was added to the fluid stream, downstream in the mixing stage of the water treatment process, to concentrations of 50 mg/l, 100 mg/l, 150 mg/l and 200 mg/l and the total concentration of phosphorus (mg/l) of the resultant supernatant was measured. This process was repeated using Hydrex 62925, dosing to iron concentrations of 6 mg/l (504), 9 mg/l (505) and 10 mg/l (506). The results are shown in Figure 5.

The results of Figure 5 show that both Hydrex 62925 and BEWAT MT48 MR interact with iron to reduce the total concentration of phosphorus. Hydrex 62925 requires a higher iron dose of 9 mg/l (505) to be as effective at phosphorus removal as BEWAT MT48 MR is with an iron dose of 6 mg/l (501) when the concentration of the respective natural coagulant is 100 mg/l, and a higher iron dose of 10 mg/l (506) to be as effective at phosphorus removal as BEWAT MT48 MR is with an iron dose of 6 mg/l (501) when the concentration of the respective natural coagulant is 50 mg/l.

Overall, both Hydrex 62925 and BEWAT MT48 MR when dosed with iron effectively remove phosphorus to below the phosphorus permit (PP).

### Example 3

Referring now to Figure 6, the effect of aluminium dosing on phosphorus removal when using BEWAT MT48 MR and Hydrex 62925 as the natural coagulant was tested.

During the electrochemical treatment stage, the fluid stream was dosed with aluminium, to concentrations of 1 mg/l (601), 4 mg/l (602) and 6 mg/l (603) by using an aluminium anode and by controlling the electrolysis power supplied to the anode. BEWAT MT48 MR natural coagulant was added to the fluid stream, downstream in the mixing stage of the water treatment process, to concentrations of 50 mg/l, 100 mg/l, 150 mg/l and 200 mg/l and the total concentration of phosphorous (mg/l) of the resultant supernatant was measured. This process was repeated using Hydrex 62925 as the natural coagulant, dosing with aluminium concentrations of 2 mg/l (604), 5 mg/l (605) and 7 mg/l (606).

The results of Figure 6 show that there is a minor difference between the performance of Hydrex 62925 and BEWAT MT48 MR when dosed with aluminium in the removal of phosphorus. Furthermore, the phosphorous residues plateau after the addition of 100 mg/l of both Hydrex 62925 and BEWAT MT48 MR natural coagulant. Without wishing to be bound by theory, this suggest that Hydrex 62925 and BEWAT MT48 MR react with aluminium via a different mechanism than does iron. Overall, both Hydrex 62925 and BEWAT MT48 MR when dosed with aluminium effectively remove phosphorous to below the phosphorus permit (PP).

### Example 4

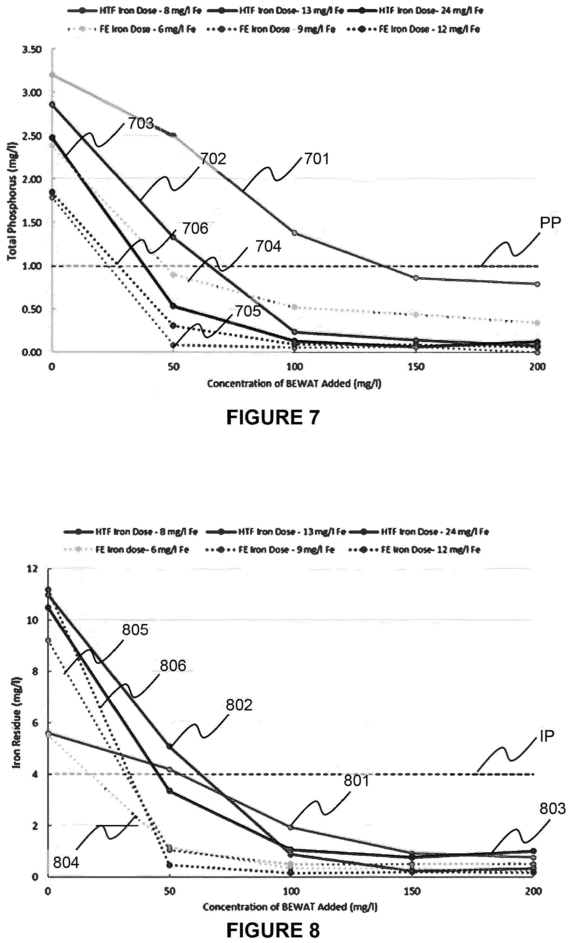

Referring now to Figure 7, the effect of the electrochemical treatment stage on the phosphorus removal performance when dosing with iron and when using BEWAT MT48 MR as the natural coagulant was tested.

In order to test the effect of the electrochemical treatment stage on phosphorus removal, the supernatant of the humus tank feed prior to electrochemical treatment was dosed with 8 mg/l (701), 13 mg/l (702) and 24mg/l (703) of iron. BEWAT MT48 MR natural coagulant was added to the fluid stream whilst mixing to concentrations of 50 mg/l, 100 mg/l, 150 mg/l and 200 mg/l and the total concentration of phosphorous (mg/l) of the resultant supernatant was measured. This process was repeated, dosing with iron during the electrochemical treatment stage by using an iron anode and by controlling the electrolysis power supplied to the anode. Iron doses of 6 mg/l (704), 9 mg/l (705) and 12 mg/l (706) were used.

The results show that dosing during the electrochemical treatment stage means that both lower concentrations of iron and BEWAT MT48 MR are required to meet the 1 mg/l phosphorus permit (PP).

### Example 5

Referring now to Figure 8, the effect of the electrochemical treatment stage on the removal of iron when dosing with iron and when using BEWAT MT48 MR as the natural coagulant was tested.

In order to test the effect of the electrochemical treatment stage on iron removal, the supernatant of the humus tank feed prior to electrochemical treatment was dosed with 7 mg/l (801), 13 mg/l (802) and 24 mg/l (803) of iron. BEWAT MT48 MR natural coagulant was added to the fluid stream whilst mixing, to concentrations of 50 mg/l, 100 mg, 150 mg/l and 200 mg/l and the total concentration of iron (mg/l) of the resultant supernatant was measured. This process was repeated, dosing with iron during the electrochemical treatment stage by using an iron anode and by controlling the electrolysis power supplied to the anode. Iron doses of 6 mg/l (804), 9 mg/l (805) and 12 mg/l (806) were used.

The results show that dosing during the electrochemical treatment stage means that both lower concentrations of iron and BEWAT MT48 MR are required to meet the 4 mg/l iron permit (IP),

### Example 6

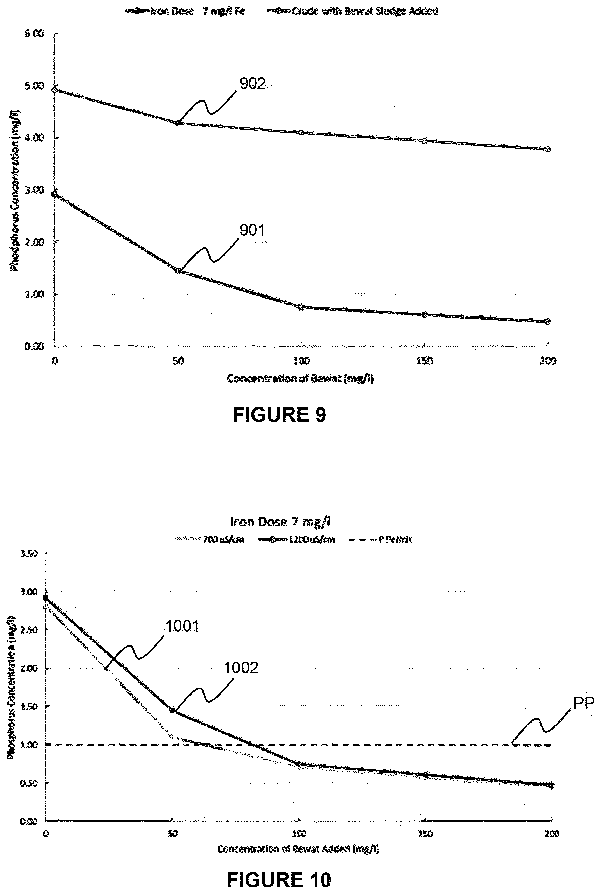

Referring now to Figure 9, a test was conducted to determine the usability of the sludge generated in the electrochemical treatment stage, when dosing with iron and using BEWAT MT48 MR as the natural coagulant.

During the electrochemical treatment stage, the fluid was dosed with 7 mg/l of iron by using an iron anode and by controlling the electrolysis power supplied to the anode. BEWAT MT48 MR natural coagulant was added to the fluid stream, downstream in the mixing stage of the water treatment process, to concentrations of 50 mg/l, 100 mg/l, 150 mg/l and 200 mg/l and the total concentration of phosphorus (mg/l) of the resultant supernatant was measured (901).

The supernatant was removed from the five sample jars and the sludge that remained in each sample was added to jars containing crude sewage. These five jars were mixed then left to settle for 30 minutes. The supernatant was removed from the jars and the concentration of phosphorus (mg/l) was determined (902).

The results show that the sludge generated from the hybridised electrochemical treatment and natural coagulant addition method, where higher concentrations of BEWAT MT48 MR were initially added had more favourable phosphorus removal capabilities. Though the phosphorus removal performance of the sludge is not as effective as using this combined method, the results demonstrate that the resultant sludge can be recycled to reduce the overall phosphorus load, for example upstream at the treatment works.

### Example 7

Referring now to Figure 10, a test was conducted to determine whether conductivity influences the removal efficiency of phosphorus when dosing with iron and using BEWAT MT48 MR as the natural coagulant.

During the electrochemical treatment stage, the fluid was dosed with 7 mg/l of iron by using an iron anode and by controlling the electrolysis power supplied to the anode. BEWAT MT48 MR natural coagulant was added to the fluid stream, downstream in the mixing stage of the water treatment process, to concentrations of 50 mg/l, 100 mg/l, 150 mg/l and 200 mg/l and the total concentration of phosphorus (mg/l) of the resultant supernatant was measured. The test was run at conductivities of 700 µS/cm (1001) and 1200 µS/cm (1002).

The results show that conductivity has little effect on phosphorus removal performance. The performance at 0, 100, 150 and 200 mg/l of BEWAT MT48 MR at the two conductivity values in almost identical, with an enhancement in the phosphorous removal performance being observed at the lower conductivity value when using 50 mg/l of BEWAT MT48 MR.

The results clearly show that using electrocoagulation along with addition of a natural coagulant had a marked effect on the efficiency of phosphorus and iron removal, clearly demonstrating the efficacy of the method.

### Comparative Example

In order to determine the impact of natural coagulant addition, we conducted tests on the water samples using electrocoagulation only using the same system as used for the Examples.

Our data revealed that to meet the permit levels of phosphorous and iron it would be necessary to use an iron dose of in excess of 45 mg/l.

Moreover, to reduce total suspended solids it was necessary to use a tertiary solids removal stage.

Accordingly, the data clearly shows that capital costs, as well as the ongoing operating costs, are reduced when using a combination of electrocoagulation and natural coagulant dosing. For example, the combination treatment requires a much lower dose of iron (6-7 times lower) which equates to using less power and/or a smaller electrocoagulation unit and/or results in less sacrificial destruction of the electrodes, whilst obviating the need for tertiary solids removal stages. The capital and running cost savings outweigh the extra cost of adding natural coagulant.

In summary, the results show that the hybridisation of electrocoagulation and the addition of natural coagulants improves the removal efficiency of phosphorous at lower metal doses compared to electrocoagulation alone. Furthermore, this hybridisation removes the need for tertiary solids removal, thereby reducing space requirements and capital expenditure.

## Claims

1. A method of treating fluid, the method comprising the steps of:
a) passing a fluid to be treated into a fluid treatment zone defined between electrodes and electrolysing the fluid within the treatment zone to form an electrolysed fluid;
b) causing or allowing electrolysed fluid to leave the treatment zone;
c) either adding a natural coagulant to the fluid; and/or
adding natural coagulant to the electrolysed fluid within the fluid treatment zone; and/or
adding natural coagulant to the electrolysed fluid downstream of the fluid treatment zone, and
d) allowing or causing flocculation of the electrolysed fluid (e.g. outside of the treatment zone) to provide a treated fluid.

2. A method according to Claim 1, further comprising, during at least a part of step a) sonicating the fluid within the treatment zone..

3. A method according to Claim 1 or 2, comprising, in step a), continuously passing the fluid to be treated into the treatment zone and/or in step c), continuously egressing electrolysed fluid from the treatment zone.

4. A method according to any preceding Claim, comprising controlling one or more of the residence time of fluid within the treatment zone, the power applied to electrolyse the fluid in step a), and/or controlling the amount of natural coagulant added in step c).

5. A method in accordance with any preceding Claim, further comprising in step d) agitating the electrolysed fluid, preferably comprising performing step c) prior to, during or after agitating the electrolysed fluid.

6. A method in accordance with any preceding Claim, wherein step c) is performed by adding natural coagulant in the range of 1 to 200 mg/l measured as mass of natural coagulant to volume of fluid to be treated

7. A method according to any preceding Claim, the method comprising recovering flocculated solids from the electrolysed fluid.

8. A method according to Claim 7, the method comprising contacting the recovered flocculated solids with fluid to be treated.

9. A fluid treatment system, the system comprising an electrolysing means or electrolyser defining a treatment zone for electrolytic treatment of fluid, a natural coagulant addition means, a controller or control means and a mixing means or mixer, the controller or control means being configured to operably control the natural coagulant addition means to add natural coagulant to fluid egressing the electrolysing means or electrolyser.

10. A fluid treatment unit comprising first anode electrode, a second grounded electrode and externally mounted ultrasonic probe mounted to the grounded electrode, defining between the first anode and second grounded electrode a treatment zone having inlet means for introduction of fluid in the said treatment zone and outlet for exit of fluid from the said treatment zone, the treatment zone providing a flow path along which fluid entering through the inlet means can flow towards the outlet, the flow path extending substantially along the surface of each of the electrodes, a natural coagulant introduction means for adding natural coagulant to the fluid downstream of the treatment zone and a mixing zone downstream of the treatment zone.

11. A fluid treatment unit according to Claim 10, further comprising a controller or control means configured to operably control the natural coagulant addition means.

12. A fluid treatment system according to Claim 9 or 11, wherein the controller or control means is configured to control one or more of
a. the residence time of fluid within the treatment zone may be controlled by the controller or control means;
b. the rate of ingress and/or rate of egress of fluid to and/or from the treatment zone;
c. the power applied to the electrolyser for electrolysing fluid within the treatment zone; and/or
d. the amount of natural coagulant added by the natural coagulant addition means.

13. A fluid treatment system according to any of Claims 9, 11 or 12, further comprising one or more sensors operable to determine one or more fluid quality parameters.

14. A fluid treatment system according to Claim 13, wherein said one or more sensors are located upstream, downstream and/or within the fluid treatment zone.

15. A fluid treatment system according to any of Claims 9 or any one of Claims 11 to 14, further comprising a sludge return means, to circulate sludge from a sludge settlement zone to the fluid to be treated.
